# EUROPÄISCHE PATENTSCHRIFT

(11) **EP 2 499 008 B1**
(45) Veröffentlichungstag und Bekanntmachung des Hinweises auf die Patenterteilung: **10.07.2019**
(21) Anmeldenummer: 10779669.0
(22) Anmeldetag: 11.11.2010
(51) Int. Cl.: B60G 5/02

(54) **HINTERACHSENMODUL UND KRAFTFAHRZEUG MIT HINTERACHSENMODUL**
REAR AXLE MODULE AND MOTOR VEHICLE HAVING A REAR AXLE MODULE
MODULE D'ESSIEU ARRIÈRE ET VÉHICULE À MOTEUR AVEC MODULE D'ESSIEU ARRIÈRE

(30) Priorität: 11.11.2009 AT 17882009
(43) Veröffentlichungstag der Anmeldung: 19.09.2012
(73) Patentinhaber: OBERAIGNER POWERTRAIN GMBH, 4154 Nebelberg (AT)
(72) Erfinder: EDER, Thomas, A-4150 Rohrbach (AT); OBERAIGNER, Wilhelm, A-4150 Rohrbach (AT); PASTER, Albert, A-4150 Rohrbach (AT)
(74) Vertreter: Wildhack & Jellinek
(86) Internationale Anmeldenummer: PCT/AT2010/000434
(87) Internationale Veröffentlichungsnummer: WO 2011/057314

(56) Entgegenhaltungen:
- WO-A1-98/34803
- DE-A1- 2 445 943
- FR-A1- 2 343 614
- JP-A- 9 076 717
- US-A- 1 615 360
- US-A- 2 209 528
- US-A- 3 547 461

## Beschreibung

Die Erfindung betrifft ein Kraftfahrzeug mit einem Hinterachsmodul. Aus der FR 2 343 614 A1 ist ein Kraftfahrzeug vergleichbarer Art bekannt.

Hinterachsenmodule mit zwei Hinterachsen werden insbesondere bei Lastkraftfahrzeugen und Geländefahrzeugen eingesetzt.

Antriebsräder können nur dann Kraft übertragen, wenn diese mit einem gewissen Mindestdruck auf dem Untergrund aufstehen. Entscheidend für die Antriebskraft bzw. für die Geländetauglichkeit eines Fahrzeugs ist es, wie gut es gelingt, die Antriebsräder auf dem Boden zu halten. Insbesondere ist dies von Bedeutung bei getrennt angetriebenen Rädern, insbesondere bei allradgetriebenen Fahrzeugen.

Speziell Fahrzeuge mit zwei Hinterachsen erreichen insbesondere im Gelände eine wesentlich größere Traktion, wenn es gelingt, die Antriebsräder möglichst gut am Boden zu halten. Die Erfindung betrifft somit ein Hinterachsmodul, bei dem zwei Pendelträger zur Bewegungskopplung der Hinterachsen vorgesehen sind, wobei jede Hinterachse jeweils beidseitig, insbesondere im mittleren Abschnitt der jeweiligen Halbachsen, zumindest eine, vorzugsweise von einer Schraubendruckfeder gebildete, Federeinheit trägt und die beiden auf derselben Seite gelegenen Federeinheiten auf jeweils einem Arm desselben Pendelträgers abgestützt sind, und wobei an jedem der beiden Pendelträger zwischen den jeweiligen Abstützpunkten der Federeinheiten ein Pendellager ausgebildet ist, mit dem der jeweilige am Fahrgestell bzw. Fahrzeugrahmen eines Fahrzeugs gelagerte Pendelträger um eine quer zum Fahrgestell bzw. Fahrzeugrahmen des Fahrzeugs verlaufende Achse verschwenkbar ist.

Es wird somit die Last der Karosserie vom Rahmen bzw. Fahrzeuggestell mittels beliebiger Federeinheiten, vorzugsweise Spiral- oder Blattfedern oder hydraulische Federeinheiten, nicht direkt auf die beiden Hinterachsen abgestützt, sondern die beiden Hinterachsen werden über derartige Federeinheiten auf zwei Pendelträgern abgestützt und die Last der Karosserie wird über die Pendellager, die Pendelträger und die Federeinheiten auf die beiden Hinterachsen verteilt.

Durch diese konstruktive Ausführung kann zu jeder Zeit innerhalb der vorgesehenen Feder- und Pendelwege ein Lastausgleich zwischen den beiden Hinterachsen erfolgen, wodurch das Belastungskollektiv jeder Hinterachse ausgeglichener ist und die Dimensionierung der beiden Hinterachsen optimiert werden
kann. Weiters erfolgt die Krafteinleitung in den Fahrzeugrahmen harmonischer, wodurch die Gesamtstruktur des Fahrzeugs weniger belastet wird als mit zwei unabhängig voneinander gelagerten, angetriebenen Hinterachsen. Durch den Einsatz eines derartigen Hinterachsmoduls kann das zulässige Gesamtgewicht eines Fahrzeugs signifikant erhöht werden, ohne die Rahmenstruktur bzw. das Fahrgestell höher belasten zu müssen. Durch den zusätzlichen Federweg des Pendelträgers werden die Anpassungsfähigkeit des Fahrzeuges an den Untergrund und damit die Geländegängigkeit verbessert. In Situationen, in denen eine der Achsen einfedert, während die andere Achse ausfedert, ermöglichen die Pendelträger einen höheren Federweg und somit eine bessere Traktion.

Schwingbewegungen der Karosserie werden reduziert, wenn beidseits an jeder Hinterachse jeweils ein Stoßdämpfer befestigt ist, mit dem die jeweilige Hinterachse am Fahrgestell bzw. Fahrzeugrahmen abstützbar ist.

Erfindungsgemäß ist vorgesehen, dass die Federeinheiten von Schraubendruckfedern gebildet sind und die Abstützpunkte der beiden auf derselben Seite gelegenen Schraubendruckfedern jeweils im Endbereich eines Armes desselben Pendelträgers gelegen sind. Es kann dabei vorgesehen sein, dass das Pendellager in einem Bereich von größer als 50 % bis 70 % des Abstandes bzw. der Strecke zwischen den Abstützpunkten der beiden Federeinheiten gelegen ist. Zwischen dem Pendellager und der hinteren Hinterachse liegt ein größerer Abstand als zwischen dem Pendellager und der vorderen Hinterachse. Durch eine asymmetrische bzw. nicht mittige Anordnung des Pendellagers in Bezug auf die Abstützpunkte der Federeinheiten bzw. der Hinterachsen auf den Armen des Pendelträgers kann die Lastverteilung auf die beiden Hinterachsen entsprechend der gewählten Abstände bzw. der dadurch bedingten Hebellängen variiert werden; z.B. können 60 % der Last auf die vordere Hinterachse und 40 % der Last auf die hintere Hinterachse verteilt werden. Von Vorteil ist es dabei, wenn vorgesehen ist, dass die Drehmomentaufteilung des Antriebsdrehmomentes auf die beiden Hinterachsen des Fahrzeuges umgekehrt proportional zur Größe der Abstände zwischen dem Pendellager und dem jeweiligen Abstützpunkt der Federeinheiten erfolgt und auf die Hinterachse, die dem Pendellager näher liegt, das höhere Drehmoment aufgebracht ist.

Durch die Verbindung der beiden Hinterachsen über die Federeinheiten, insbesondere Spiraldruckfedern, mit den beiden Pendelträgern, wird insbesondere erreicht, dass beim Einfedern der einen Hinterachse entsprechend der Hebelverhältnisse der Pendelträger auf die andere Hinterachse über die Federeinheit ein Bodendruck in dem Maß aufgebaut wird, in dem der Bodendruck der einen
Hinterachse abgebaut wird. Dadurch und mittels der zusätzlichen Pendelbewegung des Pendelträgers wird bei Bodenunebenheiten erreicht, dass sich die beiden Hinterachsen bestmöglich an die Bodenunebenheiten anpassen und der Bodenkontakt der Räder der beiden Hinterachsen bis zum Erreichen der maximalen Feder- und Pendelwege erhalten bleibt, wodurch die Traktion des Fahrzeugs vor allem im Betrieb auf unebenem Untergrund optimiert wird.

Zur Begrenzung des Pendelweges ist vorgesehen, dass an den Pendelträgern oberhalb der jeweiligen Hinterachse zumindest ein, vorzugsweise progressiv wirkender, Puffer, insbesondere Gummipuffer, angeordnet ist, gegen den die jeweilige Hinterachse bei Kompression der Federeinheit und des Stoßdämpfers anlegbar ist. Ein platzsparender Aufbau ergibt sich, wenn der Puffer innerhalb der Schraubendruckfeder angeordnet ist.

Exakte Bewegungsabläufe ergeben sich, wenn die Achsen der Pendellager parallel zu den beiden Hinterachsen verlaufen.

Zur Stabilisierung des Hinterachsmoduls kann vorgesehen sein, dass jede Hinterachse mit zwei Längslenkern und einem Querlenker, insbesondere Panhardstab, verbunden ist und damit am Fahrgestell bzw. Fahrzeugrahmen befestigbar bzw. festlegbar ist. Die Anlenkpunkte der Längslenker am Fahrzeugrahmen liegen in Fahrtrichtung gesehen, vorzugsweise vor der jeweiligen Halbachse.
Für den Betrieb im Gelände hat es sich als vorteilhaft erwiesen, wenn die Pendelbewegung bzw. der Verschwenkweg jedes Pendelträgers um das Pendellager auf ± 10°, vorzugsweise ± 7°, in Bezug auf eine Horizontalebene bzw. die Aufstandsebene des Moduls begrenzt ist.

Ein einfacher Aufbau ergibt sich, wenn jeder der Pendelträger im Endbereich seiner Arme jeweils einen Federteller bzw. eine Auflage für die Federeinheit besitzt.

Ein Kraftfahrzeug ist erfindungsgemäß dadurch gekennzeichnet, dass es einen Hinterachsmodul der erfindungsgemäßen Art besitzt. Dabei ist es vorteilhaft, wenn der Hinterachsmodul an dem Fahrgestell bzw. Fahrzeugrahmen des Fahrzeugs um eine quer zur Längserstreckung des Fahrgestells bzw. Fahrzeugrahmens verlaufende Achse verschwenkbar gelagert ist.

Für den Fahrbetrieb ist es von Vorteil, wenn an jeder Hinterachse beidseits bzw. an jeder Halbachse jeweils ein Ende eines Stoßdämpfers befestigt ist, dessen anderes Ende am Fahrgestell bzw. Fahrzeugrahmen abgestützt bzw. befestigt ist.

Das Fahrverhalten des Kraftfahrzeugs wird verbessert, wenn an jeder Halbachse der Hinterachsen ein Längslenker befestigt ist, dessen anderes Ende am Fahrgestell bzw. Fahrzeugrahmen des Fahrzeuges befestigt ist und/oder wenn an jeder Hinterachse ein Querlenker befestigt ist, dessen anderes Ende am Fahrgestell bzw. am Fahrzeugrahmen befestigt ist.

Bei nicht gelenkten Hinterachsen wird infolge der kinematischen Verhältnisse den Rädern bei einer Kurvenfahrt ein Schräglaufwinkel aufgezwungen. Dies hat erhebliche Seitenkräfte zur Folge, die eine enge Kurvenfahrt erschweren. Je größer der Achsabstand der Hinterachsen ist, umso stärker wird eine Kurvenfahrt beeinträchtigt. Aus diesem Grund sollen die Hinterachsen nach Möglichkeit nicht weit voneinander entfernt sein. Damit werden auch die Länge des Pendelträgers und die Lage der Abstützpunkte beeinflusst. Die Hinterachsen werden vorteilhaft in den Endbereichen der Arme des Pendelträgers abgestützt und die Räder, die auf den Hinterachsen befestigt sind, stehen in möglichst geringem Abstand.

Mit Blattfedern lassen sich bei kleinen Achsabständen die für Geländefahrzeuge erforderlichen Federwege nicht gut ausbilden; eine Vergrößerung des Achsabstandes hätte allerdings eine Verschlechterung der Kurvengängigkeit zur Folge. Somit werden vorteilhafterweise Spiraldruckfedern oder hydraulisch wirkende Federeinheiten eingesetzt.

Falls die Position des Pendellagers am Fahrgestell bzw. am Fahrzeugrahmen aus konstruktiven Gründen festgelegt ist, dann ermöglichen die Asymmetrie bzw. die Ausbildung unterschiedlicher Abstände der Lage der Abstützpunkte der Hinterachsen vom Pendellager Vorteile. Bei vorgegebenem Achsabstand und einer Verkleinerung des Abstandes zwischen den Abstützpunkten der vorderen Hinterachse und dem Pendellager werden die beiden Hinterachsen des Doppelachsensystems bzw. Hinterachsmoduls bezüglich des Rahmens nach hinten verschoben. Dadurch ergeben sich an der vorderen Hinterachse günstige kleinere Gelenkwellenwinkel.

Die vordere Hinterachse ist, wenn der verfügbare Pendelwinkel bzw. Verschwenkweg der Pendelachse aufgebraucht ist, insbesondere beim Überfahren von Kuppen, einer erhöhten Belastung ausgesetzt. Durch eine asymmetrische Verteilung der Achslasten aufgrund unterschiedlicher Abstände zwischen den Abstützpunkten und der Pendelachse können die aus dem normalen Straßenverkehr resultierenden Betriebslasten besser an die Extremlasten eines Geländebetriebs angeglichen werden; insbesondere kann dadurch die hintere Hinterachse schwächer ausgeführt werden. Es wird dadurch möglich, eine Starrachse mit kleinerem Tellerraddurchmesser zu verwenden, wodurch sich eine bessere Bodenfreiheit ergibt.

Ferner liegt die letzte Hinterachse näher dem Fahrzeugheck, wodurch der Überhang kleiner wird. Damit ergibt sich ein größerer Böschungswinkel. Durch ein Verringern des hinteren Überhanges kann ein rückwärtiger Unterfahrschutz vermieden werden, der Mehrkosten und eine Verschlechterung des hinteren Böschungswinkels und damit der Geländegängigkeit zur Folge hätte.

Des Weiteren ergibt die erfindungsgemäße Anordnung auch hinsichtlich des Bremssystems Vorteile. Da der Abstand der beiden Hinterachsen des Doppelachssystems bzw. Hinterachsmoduls gering ist, kann es ausreichend sein, nur eine Hinterachse mit Sensoren zu bestücken und zu regeln. Eine Änderung bzw. Einstellung der Bremskraftverteilung auf die beiden Hinterachsen ist nicht erforderlich aufgrund der Ausgleichwirkung des Pendels, die die Achslastverteilung im Wesentlichen konstant hält. Die Achslastverteilung kann über die Hebelarmlängen des Pendelträgers bzw. die Abstände der Abstützpunkte der beiden Hinterachsen auf den Armen des Pendelträgers vom Pendellager angepasst werden, sodass für die Auslegung des Bremssystems eine zusätzliche Variable zur Verfügung steht.

Eine vorteilhafte Abfederung ergibt sich, wenn die Stoßdämpfer auf den Hinterachsen sich mit einem Ende auf - in Fahrtrichtung gesehen - jeweils vor den Hinterachsen gelegenen Abstützpunkten auf diesen abstützen und sich mit ihrem anderen Ende in einem vor den Hinterachsen liegenden Bereich am Fahrzeugrahmen abstützen.

Ein einfacher Aufbau ergibt sich, wenn vom Fahrzeugrahmen beidseits ein Lagerzapfen für das Pendellager des jeweiligen Pendelträgers getragen ist.

Konstruktiv ist es von Vorteil wenn der Hinterachsmodul und die Lagerzapfen in einem Bereich des Fahrzeugrahmens angeordnet sind, in dem die Rahmenträger bzw. der Fahrzeugrahmen beidseits eine Einbuchtung bzw. Schmalstelle besitzen oder gegenüber dem restlichen Teil des Fahrzeugrahmens schmäler ausgebildet sind.

Ein stabiler Aufbau ergibt sich, wenn die Pendelträger seitlich außerhalb des Fahrzeugrahmens gelegen sind oder auf an den nach außen weisenden Seitenflächen der Rahmenträger des Fahrzeugrahmens angeordneten bzw. auf jeweils einem von diesen nach außen ragenden Lagerzapfen gelagert sind.

Im Folgenden wird die Erfindung anhand der Zeichnung beispielsweise näher erläutert. Fig. 1 zeigt schematisch ein Fahrzeug mit einem erfindungsgemäßen Hinterachsmodul. Fig. 2 zeigt schematisch einen Pendelträger eines erfindungsgemäßen Hinterachsmoduls. Fig. 3 zeigt eine perspektivische Ansicht eines erfindungsgemäßen Hinterachsmoduls. Fig. 4 zeigt schematisch einen erfindungsgemäßen Hinterachsmodul in Draufsicht.

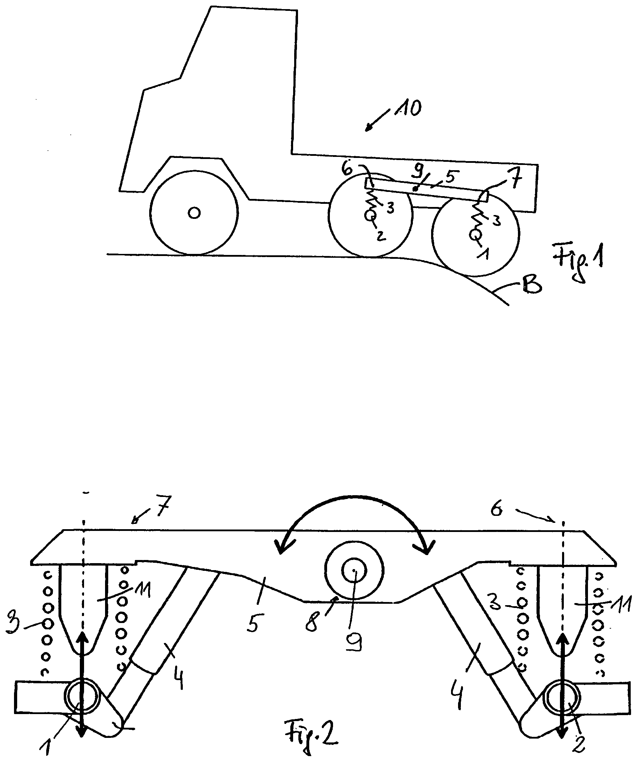

Fig. 1 zeigt schematisch ein Kraftfahrzeug mit einem erfindungsgemäßen Hinterachsmodul. Man erkennt einen schematisch dargestellten Pendelträger 5, der über Federeinheiten 3 auf einer vorderen Hinterachse 2 und einer hinteren Hinterachse 1 abgestützt ist. Die Räder der beiden Hinterachsen 1, 2 werden durch den um ein Pendellager 8 um eine Pendelachse 9 verkippbar gelagerten Pendelträger 5 an den Boden B bzw. die Aufstandsebene angedrückt. Der Abstützpunkt 6 der Federeinheit 3 der vorderen Hinterachse 2 auf dem Pendelträger 5 liegt näher dem Pendellager 8 als der Abstützpunkt 7 der Federeinheit 3 der hinteren Hinterachse 1.

Hauptgründe für die Asymmetrie des Pendelträgers sind das vorteilhafte Bremsverhalten bzw. ein kürzerer Bremsweg und ein geringeres Risiko von instabilen Fahrzuständen. Im Hinblick auf das Bremssystem besteht der wesentliche Vorteil darin, dass bei einer Asymmetrie insgesamt ein größerer Anteil der gesamten Hinterachslast mittels ABS geregelt werden kann. Da die ABS Sensoren nur auf der Hinterachse mit der höheren Achslast sitzen und die andere Hinterachse mit gleicher Regelung an den selben beiden ABS-Kanälen mitgebremst wird, wirkt die ABS-Regelung auf die wichtigere der beiden Hinterachsen. Mangels Sensoren kann der genaue Zustand der ungeregelten Hinterachse nicht erfasst werden, die Bremskraftverteilung muss daher so erfolgen, dass die Kraftschlusswerte an der ungeregelten Achse nicht voll ausgenutzt werden, d.h. es wird etwas Bremsweg verschenkt. Falls die mögliche Bremskraft an einer Hinterachse mit z.B. 40% Achslastanteil nicht voll ausgenutzt wird, dann hat das auf den Bremsweg geringere Auswirkungen, als wenn dies an der Hinterachse mit den übrigen 60% Achslastanteil passiert. Im Falle einer Verteilung von 50:50% wäre die Hälfte der Hinterachslast ohne direkte ABS Regelung, bei einer asymmetrischen Achslastverteilung sind es stets unter 50%. Auch kann dadurch sichergestellt werden, dass die "wichtigere" Hinterachse nicht blockiert, während die Folgen eines kurzzeitigen Blockierens der leichteren bzw. weniger belasteten Hinterachse weniger gravierend sind.

Die hintere Hinterachse 1 kann bei üblichen Hinterachsaufhängungen bei Geländefahrten beim Überfahren von Kuppen sehr leicht vom Boden abheben, was in Hinblick auf die Geländegängigkeit des Fahrzeugs nachteilig ist. In diesem Fall könnte sich die vordere Hinterachse 2 infolge der hohen Achslast tief in den Untergrund graben. Des Weiteren benötigt die vordere Hinterachse 2 keine so großen Pendelwege wie die hintere Hinterachse 1, da die vordere Hinterachse 2 näher an der Vorderachse liegt und somit die Höhenunterschiede zur Vorderachse tendenziell kleiner sind als zwischen der Vorderachse und der hinteren Hinterachse.

Durch Eingrenzung der Endanschläge, z.B. auf einen Pendelweg von ± 5°,werden bei asymmetrischer Gestaltung der Lagerung der Hinterachsen 1, 2 im Bezug auf das Pendellager 8 bzw. die Pendelachse 9 die Zusatzfederwege an der vorderen Hinterachse 2 verringert und an der hinteren Hinterachse 1 vergrößert. Damit ergibt sich der gewünschte Effekt eines größeren Federweges an der hinteren Hinterachse 1.

In Fig. 2 ist einer der beiden Pendelträger 5 dargestellt, so wie er bei einem erfindungsgemäßen Hinterachsenmodul eingesetzt wird. Der Pendelträger 5 ist mit dem Pendellager 8 an dem Fahrgestell bzw. Fahrzeugrahmen 20 längsverlaufend bezüglich der Karosserie angeordnet und um die quer zur Bewegungsrichtung des Fahrzeugs verlaufende Pendelachse 9 des Pendellagers 8 verschwenkbar. Jeweils zwei Pendelträger 5 sind parallel zueinander in Längsrichtung des Fahrzeugs angeordnet und unabhängig voneinander verschwenkbar.

Auf den beiden Armen der beiden Pendelträger 5 sind jeweils in Abstützpunkten 6 und 7 die Hinterachsen 1 und 2 bzw. deren Halbachsen abgestützt. Jede Hinterachse 1, 2 ist jeweils über eine Federeinheit 3, insbesondere eine Spiraldruckfeder, im Endbereich der Arme der beiden Pendelträger 5 in den Abstützpunkten 6, 7 abgestützt. Jede Hinterachse 1, 2 trägt zwei bzw. jede Halbachse trägt einen Stoßdämpfer 4, deren nach oben gerichteten Enden am hier nicht dargestellten Fahrgestell 20 befestigt sind. Die Last der Karosserie wird über die Federeinheiten 3 auf die beiden Hinterachsen 1, 2 übertragen. Die Stoßdämpfer 4 dämpfen die Bewegungen des Fahrgestells 20 bzw. der Karosserie in Bezug auf die Hinterachsen 1, 2 und stützen sich in Abstützpunkten 43 auf der jeweiligen Halbachse ab.

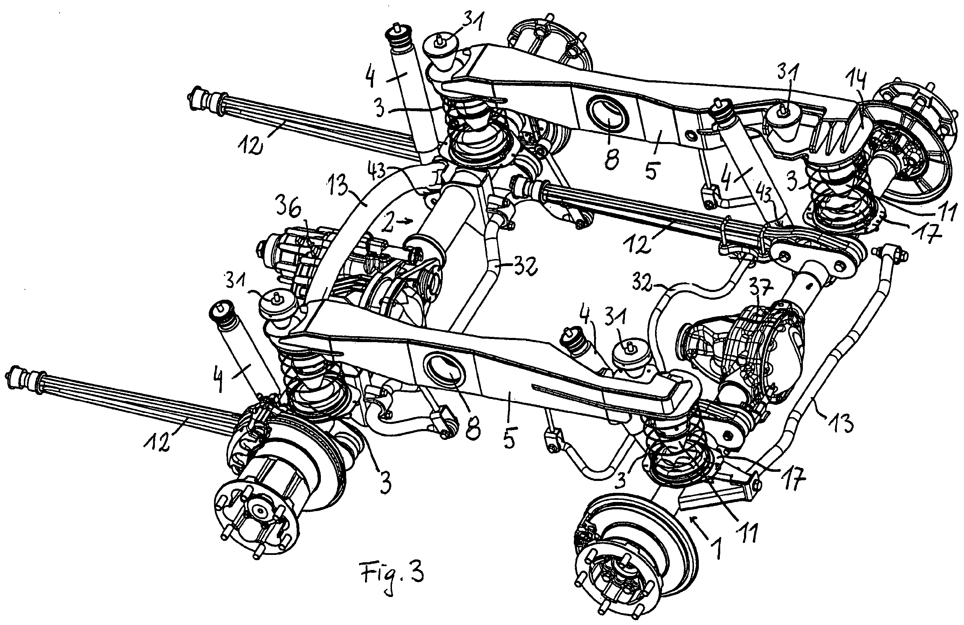

Federpuffer 11 begrenzen den Schwenkweg des Pendelträgers 5 in Bezug auf die Hinterachsen 1, 2. Die Puffer 11 können Gummipuffer sein und innerhalb der Spiraldruckfedern 3 liegen. Der Schwenkweg der Pendelträger 5 gegenüber dem Fahrgestell bzw. der Karosserie kann mit in Fig. 3 dargestellten Anschlägen 31 begrenzt werden, die gegen das Fahrgestell 20 anschlagen.

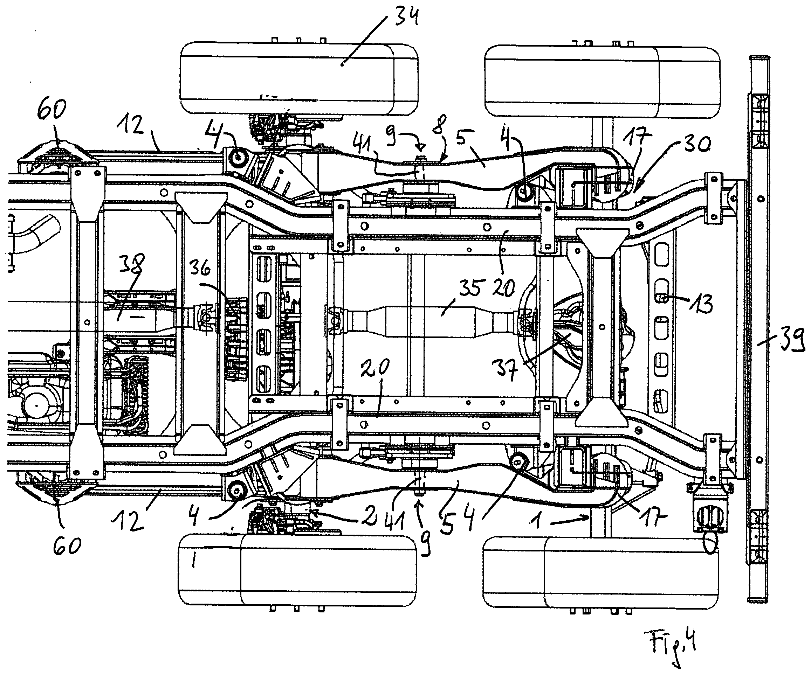

Wie aus Fig. 3 und 4 ersichtlich ist, wird an jeder Seite des Kraftfahrzeuges bzw. des Fahrgestells 20 ein Pendelträger 5 angeordnet. Die Hinterachsen 1, 2 sind jeweils mit zwei Längslenkern 12 mit dem Fahrgestell bzw. Fahrzeugrahmen 20 verbunden. Des Weiteren ist jede Hinterachse 1, 2 über einen Querlenker 13 mit dem Fahrgestell bzw. dem Fahrzeugrahmen 20 verbunden.

In Fig. 3 ist der Fahrzeugrahmen 20, an dem die oberen Enden der Stoßdämpfer 4 befestigt werden, nicht dargestellt. Aus Fig. 4 sind die am Pendelträger ausgebildeten Federteller 17 und die Abstützpunkte der Stoßdämpfer 4 ersichtlich.

In Fig. 3 ist ein erfindungsgemäßer Hinterachsmodul in perspektivischer Ansicht dargestellt. In den Endbereichen der Arme der beiden Pendelträger 5 sind Federteller 14 angeordnet, zwischen denen und weiteren Federtellern 17 an den Hinterachsen 1, 2 Spiralfedern 3 angeordnet sind. Nach oben zu sind an den Pendelträgern 5 Pendelanschlagpuffer 31 angeordnet, welche mit Anschlägen am Fahrzeugrahmen zusammenwirken und den Pendelweg der Pendelträger 5 begrenzen.

Die Hinterachsen 1, 2 sind getrennt voneinander mittels Getrieben 36, 37 angetrieben. Das Getriebe 36 ist von einer Kardanwelle 38 getrieben und treibt über eine Durchtriebsachse 35 das Getriebe 37.

In Fig. 4 sind die von den jeweiligen Halbachsen der Hinterachsen 1, 2 getragenen Räder 34 und eine vom Fahrzeugrahmen 20 getragene Stoßstange 39 ersichtlich.

Der Fahrzeugrahmen 20 besitzt beidseitig eine Schmalstelle bzw. Einbuchtung 30 zur Aufnahme der jeweiligen Pendelträger 5. In dieser Einbuchtung liegt der fahrzeugrahmenseitige Lagerteil des Pendellagers 8 bzw. ein als Lagerteil dienender Achszapfen 41. Die Pendelträger 5 sind um die von den Pendellagern 8 definierte Pendelachse 9 verschwenkbar. Die Stoßdämpfer 4 sind in vorgesehenen Befestigungspunkten mit dem Fahrzeugrahmen 20 verbunden.

Die Pendellager 8 sind auf die von den Trägern des Fahrzeugsrahmen 20 getragenen Lagerzapfen 41 aufgesetzt, die in Fig. 4 lediglich angedeutet sind.

Ein besonders wirtschaftliches und robustes Aufhängungssystem für eine mit Schraubendruckfedern abgefederte Starrachse stellt das Führen der Achse an zwei Längslenkern 12 und einem Panhardstab 13 dar. Nachteilig ist jedoch, dass Antriebs- und Bremskräfte Abstützreaktionen an den rahmenseitigen Anlenkpunkten der Längslenker 12 hervorrufen. Diese können durch Aufstellen des Kräfte- und Momentangleichgewichts am jeweiligen Längslenker 12 ermittelt werden. Durch diese Abstützreaktionen wird ein Teil der Achslast über die Längslenker 12 in den Rahmen 20 geleitet. Die von den Federeinheiten 3 zu übertragende Kraft kann sich dadurch erhöhen oder reduzieren, die Folge ist ein Ein- oder Ausfedern. Diese bei normalen zweiachsigen Straßenfahrzeugen im Allgemeinen unerwünschten Reaktionen können an einem erfindungsgemäßen dreiachsigen Kraftfahrzeug, insbesondere Geländefahrzeug, in vorteilhafter Weise genutzt werden.

Die rahmenseitigen Anlenkpunkte der Längslenker 12 können vor- oder hinter der jeweiligen Hinterachse 1, 2 liegen. In beiden Fällen werden die Längslenker 12 möglichst horizontal zur Aufstandsebene bzw. Fahrbahn angeordnet. Durch eine im Wesentlichen horizontale Anordnung können die beim Überfahren von einseitigen Bodenunebenheiten auftretenden unerwünschten Lenkeffekte möglichst gering gehalten werden, was den Geradeauslauf verbessert.

Liegen die rahmenseitigen Anlenkpunkte der Längslenker 12 einer der Hinterachsen 1, 2 in Fahrtrichtung gesehen vor dieser Hinterachse, dann erhöht sich bei Vorwärtsfahrt beim Übertragen von Bremskräften die Federkraft, während sie beim Übertragen von Zugkräften sinkt. Durch die Änderung der Federkraft kommt es zu einem Ein- oder Ausfedern. Für den Fall einer Anordnung der Anlenkpunkte hinter der jeweiligen Hinterachse 1, 2 drehen sich die Verhältnisse um, d.h. Zugkräfte führen zu einer Erhöhung der Federkraft, Bremskräfte führen zu einer Absenkung der Federkraft.

Der Pendelträger 5 wirkt über die Federeinheiten 3 auf beide Achsen 1, 2 ein. Entsprechend der gewählten Länge der Hebelarme des Pendelträgers 5 weisen die Federkräfte ein bestimmtes Verhältnis zueinander auf. Es ist günstig, wenn die Abstützreaktionen an beiden Hinterachsen 1, 2 ähnliche Änderungen der Federkräfte hervorrufen, d.h. Ausfedern beider Hinterachsen 1, 2 oder Einfedern beider Hinterachsen 1, 2, da dies keine oder nur eine geringe Verdrehung des Pendelträgers 5 bewirkt. Wäre die Reaktion unterschiedlich, dann müsste der Pendelträger 5 eine erhebliche Verdrehung durchführen, um wieder einen Gleichgewichtszustand herzustellen.

Vorteilhaft ist es somit, wenn die Anlenkpunkte von beiden Längslenker 1, 2 jeweils vor der mit ihnen verbundenen Hinterachse 1, 2 liegen. Dadurch kommt es jeweils an beiden mit einem Pendelträger 5 verbundenen Federeinheiten 3 zu einem Aus- oder Einfedern. Dadurch kann die Verdrehung des Pendelträgers 5 gering gehalten werden, der für Federungszwecke erforderliche Pendelwinkel wird aber nicht eingeschränkt.

Erfindungsgemäß sind beide Anlenkpunkte 12 bevorzugt jeweils vor der mit ihnen verbundenen Hinterachse 1, 2 angeordnet. Die Längslenker 12 der vorderen Hinterachse 2 sind an Anlenkpunkten 60 am Rahmen 20 angelenkt bzw. befestigt. Die Anlenkpunkte der Längslenker 12 der hinteren Hinterachse 1 sind durch den Rahmen 20 verdeckt. Bei einer derartigen Anordnung führen Zugkräfte jeweils zu einer Reduktion der Federkräfte und damit zu einem Ausfedern. Ohne Ausgleichswirkung des Pendelträgers 5 würde im Falle unterschiedlicher Traktionsverhältnisse der beiden Hinterachsen 1, 2 automatisch Achslast zu jener Hinterachse 1, 2 umverteilt, die in der Lage ist, die Antriebskraft besser in Vortrieb umzusetzen. Erfindungsgemäß ist vorgesehen diesen achskinematischen Traktionsvorteil partiell zu nutzen, indem durch progressiv wirkende Gummipuffer 11 zwischen dem Fahrzeugrahmen 20 und den Pendelträgern 5 Drehbewegungen um die Pendelachse 9 nicht völlig ohne Widerstand zugelassen werden.

Es ist von Vorteil, wenn in Konstruktionslage, d.h. in voll beladenem Zustand, die an der jeweiligen Hinterachse 1, 2 befestigten Längslenker 12 horizontal oder in einem Winkel von bis zu 10° zur Aufstandsebene des Fahrzeugs von ihrem Befestigungspunkt am Fahrzeugrahmen bzw. Fahrgestell in Richtung auf das Fahrzeugende zu abfallend geneigt verlaufen. Die in Fahrtrichtung vorne liegenden Befestigungspunkte der Längslenker 12 liegen somit auf gleicher Höhe oder höher als ihr Befestigungspunkt an der jeweiligen Hinterachse 1, 2 bzw. an deren jeweiliger Halbachse.

Ein Kraftfahrzeug mit einem erfindungsgemäßen Hinterachsmodul und einem diesen antreibenden Antriebsmotor besitzt eine verbesserte Traktion und allenfalls auch einen verkleinerten Wendekreis, wenn vorgesehen ist, dass die Drehmomentaufteilung des Antriebsdrehmomentes auf die beiden Hinterachsen 1, 2 des Fahrzeuges umgekehrt proportional zur Größe der Abstände zwischen dem Pendellager 8 und dem jeweiligen Abstützpunkt 6, 7 der Federeinheiten 3 erfolgt und/oder dass auf die Hinterachse 2, die dem Pendellager 3 näher liegt, das höhere Drehmoment aufgebracht ist.

## Patentansprüche

1. Kraftfahrzeug mit einem Hinterachsmodul mit zwei, insbesondere getrennt oder unabhängig voneinander, antreibbaren oder angetriebenen, Hinterachsen (1, 2), vorzugsweise Starrachsen, deren Bewegungen mit zwei Pendelträgern (5) gekoppelt sind,
- wobei jede Hinterachse (1, 2) jeweils beidseitig, vorzugsweise im mittleren Abschnitt der jeweiligen Halbachsen, zumindest eine Federeinheit (3) trägt,
- wobei an jedem der beiden Pendelträger (5) zwischen den jeweiligen Abstützpunkten (6, 7) der Federeinheiten (3) ein Pendellager (8) ausgebildet ist, mit dem der jeweilige am Fahrgestell und/oder Fahrzeugrahmen (20) des Fahrzeugs (10) gelagerte Pendelträger (5) um eine quer zum Fahrgestell und/oder Fahrzeugrahmen (20) verlaufende Achse (9) verschwenkbar ist,
- wobei die Federeinheiten (3) von Schraubendruckfedern gebildet sind und die Abstützpunkte (6, 7) der beiden auf derselben Seite gelegenen Schraubendruckfedern jeweils im Endbereich eines Armes desselben Pendelträgers (5) gelegen sind,
**dadurch gekennzeichnet, dass** jeweils
das Pendellager (8) am Pendelträger (5) asymmetrisch in Bezug auf die Abstützpunkte (6, 7) der Federeinheiten (3) oder der beiden Hinterachsen (1, 2) gelegen ist und zwischen dem Pendellager (8) und dem hinteren Abstützpunkt (7) oder der hinteren Hinterachse (1) ein größerer Abstand liegt als zwischen dem Pendellager (5) und dem vorderen Abstützpunkt (6) oder der vorderen Hinterachse (2).

2. Kraftfahrzeug nach Anspruch 1, **dadurch gekennzeichnet, dass** das Pendellager (8) in einem Bereich von größer 50 bis 70 %, insbesondere 55 bis 70 %, des Abstandes zwischen den Abstützpunkten (6, 7) der beiden Federeinheiten (3) gelegen ist.

3. Kraftfahrzeug nach Anspruch 1 oder 2, **dadurch gekennzeichnet, dass** die Achsen der beiden Pendellager (8) fluchten und parallel zu den Hinterachsen (1, 2) verlaufen und/ oder dass die Halbachsen Federteller (17) tragen, auf denen die Schraubendruckfedern abgestützt sind.

4. Kraftfahrzeug nach einem der Ansprüche 1 bis 3, **dadurch gekennzeichnet, dass** an den Pendelträgern (5) oberhalb der jeweiligen Hinterachse (1, 2) zumindest ein, vorzugsweise progressiv wirkender, Puffer (11), insbesondere Gummipuffer, angeordnet ist, gegen den die jeweilige Hinterachse (1, 2) bei Kompression der
Federeinheit (3) anlegbar ist, wobei der Puffer (11) gegebenenfalls innerhalb der Schraubendruckfeder (3) angeordnet ist.

5. Kraftfahrzeug nach einem der Ansprüche 1 bis 4, **dadurch gekennzeichnet, dass** jede Hinterachse (1, 2) mit zwei jeweils an einer Halbachse angreifenden Längslenkern (12) und/oder mit einem Querlenker (13) vorzugsweise einen Panhardstab, verbunden ist und damit am Fahrgestell und/oder Fahrzeugrahmen (20) befestigbar oder festlegbar ist.

6. Kraftfahrzeug nach einem der Ansprüche 1 bis 5, **dadurch gekennzeichnet, dass** beidseits an jeder Hinterachse (1, 2) jeweils ein Stoßdämpfer (4) befestigt ist, mit dem die jeweilige Hinterachse (1, 2) am Fahrgestell und/oder Fahrzeugrahmen (20) abstützbar ist.

7. Kraftfahrzeug nach einem der Ansprüche 1 bis 6, **dadurch gekennzeichnet, dass** die Pendelbewegung bzw. der Verschwenkweg jedes Pendelträgers (5) um das Pendellager (8) auf ± 10°, vorzugsweise ± 7°, in Bezug auf eine Horizontalebene bzw. die Aufstandsebene des Moduls (10) begrenzt ist.

8. Kraftfahrzeug nach einem der Ansprüche 1 bis 7, **dadurch gekennzeichnet, dass** jeder der Pendelträger (5) im Endbereich seiner Arme jeweils einen Federteller bzw. eine Auflage (14) für die Federeinheit (3) besitzt.

9. Kraftfahrzeug nach einem der Ansprüche 1 bis 8, **dadurch gekennzeichnet, dass** das Hinterachsmodul an dem Fahrgestell bzw. Fahrzeugrahmen (20) des Fahrzeugs (10) um eine quer zur Längserstreckung des Fahrgestells bzw. Fahrzeugrahmens (20) verlaufende Achse (9) verschwenkbar gelagert ist.

10. Kraftfahrzeug nach einem der Ansprüche 1 bis 9, **dadurch gekennzeichnet, dass** an jeder Hinterachse (1, 2) beidseits und/oder an jeder Halbachse ein Ende eines Stoßdämpfers (4) befestigt ist, dessen anderes Ende am Fahrgestell und/oder Fahrzeugrahmen (20) abgestützt bzw. befestigt ist.

11. Kraftfahrzeug nach einem der Ansprüche 1 bis 10, **dadurch gekennzeichnet, dass** an jeder Halbachse jeder Hinterachse (1, 2) ein Ende eines Längslenkers (12) befestigt ist, dessen anderes Ende am Fahrgestell und/oder Fahrzeugrahmen (20), vorzugsweise in einem in Fahrtrichtung gesehen vor der Halbachse gelegenen Anlenkpunkt, befestigt ist.

12. Kraftfahrzeug nach einem der Ansprüche 1 bis 11, **dadurch gekennzeichnet, dass** an jeder Hinterachse (1, 2) ein Querlenker (13) befestigt ist, dessen anderes Ende am Fahrgestellt und/oder am Fahrzeugrahmen (20) befestigt ist.

13. Kraftfahrzeug nach einem der Ansprüche 1 bis 12, **dadurch gekennzeichnet, dass** vom Fahrzeugrahmen (20) beidseits jeweils ein Lagerzapfen (41) getragen ist, auf den das Pendellager (8) des jeweiligen Pendelträgers (5) aufgesetzt ist und/oder dass der Hinterachsmodul und die Lagerzapfen (41) in einem Bereich des Fahrzeugsrahmens (20) an diesem befestigt sind, in dem die Rahmenträger und/oder der Fahrzeugrahmen (20) beidseits eine Einbuchtung (33) besitzt und/oder gegenüber dem restlichen Teil des Fahrzeugrahmens (20) schmäler ausgebildet sind.

14. Kraftfahrzeug nach einem der Ansprüche 1 bis 13, **dadurch gekennzeichnet, dass** die Pendelträger (5) seitlich außerhalb des Fahrzeugrahmens (20) gelegen sind oder auf an den nach außen weisenden Seitenflächen der Rahmenträger des Fahrzeugrahmens (20) angeordneten und/oder vom Fahrzeugrahmen (20) nach außen ragenden Lagerzapfen (41) gelagert sind.

15. Kraftfahrzeug nach einem der Ansprüche 1 bis 14, **dadurch gekennzeichnet, dass** am Fahrzeugrahmen (20) Anschläge vorgesehen sind, die den Schwenkweg der Pendelträger (5) gegenüber dem Fahrzeugrahmen (20) auf ±10°, vorzugsweise ±7°, begrenzen.

16. Kraftfahrzeug nach einem der Ansprüche 1 bis 15, **dadurch gekennzeichnet, dass** die Drehmomentaufteilung des Antriebsdrehmomentes auf die beiden Hinterachsen (1, 2) des Fahrzeuges umgekehrt proportional zur Größe der Abstände zwischen dem Pendellager (8) und dem jeweiligen Abstützpunkt (6, 7) der Federeinheiten (3) erfolgt und/oder dass auf die Hinterachse (2), die dem Pendellager (3) näher liegt, ein höheres Drehmoment aufgebracht ist.

17. Kraftfahrzeug nach einem der Ansprüche 1 bis 16, **dadurch gekennzeichnet, dass** die Stoßdämpfer (4) in Fahrtrichtung gesehen jeweils vor den Hinterachsen (1, 2) liegen und in einem vor diesen liegenden Bereich am Fahrzeugrahmen (20) abgestützt sind.

18. Kraftfahrzeug nach einem der Ansprüche 1 bis 17, **dadurch gekennzeichnet, dass** in Konstruktionslage die an der jeweiligen Hinterachse (1, 2) befestigten Längslenker horizontal oder in einem Winkel von bis zu 10° ansteigend geneigt zur Aufstandsebene des Fahrzeugs in Richtung auf das Vorderende des Fahrzeugs zu verlaufen.

## Claims

1. Motor vehicle with a rear axle with two rear axles (1, 2), preferably rigid axles, in particular driven or driveable separately or independently from one another, whose movements are coupled with two self-aligning carriers (5),
- wherein each rear axle (1, 2) respectively carries at least one spring unit (3) on both sides, preferably in the middle section of the respective half-axes,
- wherein a self-aligning bearing (8) is formed on each of the two self-aligning carriers (5) between the respective self-aligning bearings (6, 7) of the spring units (3), wherein the self-aligning carrier (5) mounted respectively on the chassis and/or vehicle frame (20) of the vehicle (10) is pivotable about an axis (9) extending transversely to the chassis and/or the vehicle frame (20),
- wherein the spring units (3) are formed by helical compression springs and the support points (6, 7) of the two compression coil springs are respectively located on the same side in the end region of an arm of the same self-aligning carrier (5),
**characterized in that**
the self-aligning bearing (8) is located asymmetrically on the self-aligning carrier (5) with respect to the support points (6, 7) of the spring units (3) or the two rear axles (1, 2), and between the self-aligning bearing (8) and the rear support point (7) or the rear axle (1), and is located at a greater distance than the distance between the self-aligning bearing (5) and the front support point (6) or the front rear axle (2).

2. Motor vehicle according to claim 1,
**characterized in that**
the self-aligning bearing (8) lies in a range greater than 50 to 70%, in particular 55 to 70%, of the distance between the support points (6, 7) of the two spring units (3).

3. Motor vehicle according to claim 1 or 2,
**characterized in that**
the axes of the two self-aligning bearings (8) are aligned and parallel to the rear axles (1, 2) and/or carry the half-axle spring plate (17) on which the helical compression springs are supported.

4. Motor vehicle according to one of the claims 1 to 3,
**characterized in that**
at least one, preferably progressively-acting, buffer (11), in particular a rubber buffer, is arranged on the self-aligning carrier (5) above the respective rear axle (1, 2), against which the respective rear axle (1, 2) is applied by compression of the spring unit (3), wherein the buffer (11), if appropriate, is arranged inside the helical compression spring (3).

5. Motor vehicle according to one of the claims 1 to 4,
**characterized in that**
each rear axle (1, 2) is connected with two trailing arms (12) engaging respectively with a half-axle and/or with a transverse link (13) preferably a Panhard rod, and is thus fixable or fastenable to the chassis and/or vehicle frame (20).

6. Motor vehicle according to one of the claims 1 to 5,
**characterized in that**
a shock absorber (4) is attached respectively on both sides of each rear axle (1, 2) with which the respective rear axle (1, 2) may be supported on the chassis and/or vehicle frame (20).

7. Motor vehicle according to one of the claims 1 to 6,
**characterized in that**
the self-aligning movement or the pivoting path of each self-aligning carrier (5) about the self-aligning bearing (8) is respectively limited to ± 10°, preferably ± 7°, with respect to a horizontal plane or the standing plane of the module (10).

8. Motor vehicle according to one of the claims 1 to 7,
**characterized in that**
each of the self-aligning carriers (5) has a spring plate or a support (14) for the spring unit (3) in the end region of its arms.

9. Motor vehicle according to one of the claims 1 to 8,
**characterized in that**
the rear axle on the chassis or vehicle frame (20) of the motor vehicle (10) is mounted to be pivotable about an axis (9) extending transversely to the longitudinal extension of the chassis or vehicle frame (20).

10. Motor vehicle according to one of the claims 1 to 9,
**characterized in that**
on each rear axle (1, 2) on both sides and/or on each half-axle is fixed to one end of a shock absorber (4), while the other end is supported or fixed on the chassis and/or the vehicle frame (20).

11. Motor vehicle according to one of the claims 1 to 10,
**characterized in that**
one end of a longitudinal arm (12) is fixed on each half-axle of each rear axle (1, 2), while the other end is fixed on the chassis and/or the vehicle frame (20), preferably at an articulation point located in front of the half-axle in the driving direction.

12. Motor vehicle according to one of the claims 1 to 11,
**characterized in that**
a transverse control arm (13) is fastened on each rear axle (1, 2), while the other end is attached to the chassis and/or vehicle frame (20).

13. Motor vehicle according to one of the claims 1 to 12,
**characterized in that**
a bearing journal (41) is supported on both sides of the vehicle frame (20), and on which is fitted the self-aligning bearing (8) of the respective self-aligning carrier (5), and/or where the rear axle and the bearing journal (41) are fixed to this in a region of the vehicle frame (20), wherein the frame carrier and/or the vehicle frame (20) has a recess (33) on both sides, and/or is/are formed to be narrower with respect to the remaining part of the vehicle frame (20).

14. Motor vehicle according to one of the claims 1 to 13,
**characterized in that**
the self-aligning carriers (5) are located laterally outwards from the vehicle frame (20), or are arranged on the outwards-facing side surfaces of the frame carrier of the vehicle frame (20) and/or are supported on bearing journals (41) protruding outwards from the vehicle frame (20).

15. Motor vehicle according to one of the claims 1 to 14,
**characterized in that**
stops are provided on the vehicle frame (20) to limit the pivoting of the self-aligning carrier (5) relative to the vehicle frame (20) to ± 10°, preferably ± 7°.

16. Motor vehicle according to one of the claims 1 to 15,
**characterized in that**
the torque distribution of the drive torque to the two rear axles (1, 2) of the vehicle is inversely proportional to the size of the distance between the self-aligning bearing (8) and the respective support point (6, 7) of the spring units (3), and/or that a higher torque is applied to the self-aligning bearing (3) lying closer to the rear axle (2).

17. Motor vehicle according to one of the claims 1 to 16,
**characterized in that**
the shock absorbers (4) as seen in the direction of travel, each lie in front of the rear axles (1, 2) and are supported on the vehicle frame (20) in a region lying in front of these.

18. Motor vehicle according to one of the claims 1 to 17,
**characterized in that**
in the construction position, the longitudinal arms fastened to the respective rear axle (1, 2) rise horizontally or inclined at an angle of up to 10° with respect to the standing plane of the vehicle in the direction of the front end of the vehicle.

## Revendications

1. Véhicule automobile avec un module d'essieux arrière avec deux essieux arrière (1, 2), en particulier entraînés ou pouvant être entraînés séparément ou indépendamment l'un de l'autre, de préférence des essieux rigides dont les mouvements sont couplés à deux supports pendulaires (5),
- chaque essieu arrière (1, 2) portant au moins une unité de ressort (3) respectivement des deux côtés, de préférence dans le tronçon central des demi-essieux respectifs,
- un palier articulé (8) étant constitué sur chacun des deux supports pendulaires (5) entre les points d'appui (6, 7) respectifs des unités de ressort (3), avec lequel le support pendulaire (5) respectif supporté sur le châssis et/ou le cadre du véhicule (20) du véhicule (10) peut pivoter autour d'un axe (9) transversal par rapport au châssis et/ou au cadre du véhicule (20),
- les unités de ressort (3) étant formées de ressorts de compression hélicoïdaux, et les points d'appui (6, 7) des deux ressorts de compression hélicoïdaux situés sur le même côté étant situés respectivement dans la zone extrême d'un bras du même support pendulaire (5),
**caractérisé en ce que**
respectivement le palier articulé (8) est situé sur le support pendulaire (5) de façon asymétrique par rapport aux points d'appui (6, 7) des unités de ressort (3) ou des deux essieux arrière (1, 2), et il y a entre le palier articulé (8) et le point d'appui arrière (7) ou l'essieu arrière (1) situé en arrière une distance plus grande qu'entre le support pendulaire (5) et le point d'appui avant (6) ou l'essieu arrière (2) situé en avant.

2. Véhicule automobile selon la revendication 1, **caractérisé en ce que** le palier articulé (8) est situé dans une plage de plus de 50 à 70 %, en particulier de 55 à 70%, de la distance entre les points d'appui (6, 7) des deux unités de ressort (3) .

3. Véhicule automobile selon la revendication 1 ou 2, **caractérisé en ce que** les essieux des deux paliers articulés (8) affleurent l'un avec l'autre et sont parallèles aux essieux arrière (1, 2) et/ou **en ce que** les demi-essieux portent des coupelles de ressort (17) sur lesquelles s'appuient les ressorts de compression hélicoïdaux.

4. Véhicule automobile selon l'une des revendications 1 à 3, **caractérisé en ce que**, sur les supports pendulaires (5) au-dessus de l'essieu arrière (1, 2) respectif, il est disposé au moins un butoir (11), de préférence à action progressive, en particulier un butoir en caoutchouc contre lequel vient appuyer l'essieu arrière (1, 2) respectif lors de la compression de l'unité de ressort (3), le tampon (11) étant le cas échéant disposé à l'intérieur du ressort de compression hélicoïdal (3).

5. Véhicule automobile selon l'une des revendications 1 à 4, **caractérisé en ce que** chaque essieu arrière (1, 2) est raccordé à deux bras oscillants longitudinaux (12) agissant respectivement sur un demi-essieu et/ou à un bras oscillant transversal (13), de préférence une barre Panhard, et peut donc être fixé ou immobilisé sur le châssis et/ou le cadre du véhicule (20).

6. Véhicule automobile selon l'une des revendications 1 à 5, **caractérisé en ce que**, des deux côtés sur chaque essieu arrière (1, 2), il est fixé respectivement un amortisseur (4) avec lequel l'essieu arrière (1, 2) respectif peut être appuyé sur le châssis et/ou le cadre du véhicule (20).

7. Véhicule automobile selon l'une des revendications 1 à 6, **caractérisé en ce que** le mouvement pendulaire ou respectivement la course de pivotement de chaque support pendulaire (5) autour du palier articulé (8) est limité(e) à ± 10°, de préférence ± 7°, par rapport à un plan horizontal ou respectivement au plan d'assise du module (10).

8. Véhicule automobile selon l'une des revendications 1 à 7, **caractérisé en ce que**, dans la zone extrême de ses bras, chacun des supports pendulaires (5) possède respectivement une coupelle de ressort ou respectivement un appui (14) pour l'unité de ressort (3).

9. Véhicule automobile selon l'une des revendications 1 à 8, **caractérisé en ce que** le module d'essieux arrière est supporté sur le châssis et/ou le cadre du véhicule (20) du véhicule (10) de façon à pouvoir pivoter autour d'un axe (9) transversal par rapport à l'étendue longitudinale du châssis et/ou du cadre du véhicule (20).

10. Véhicule automobile selon l'une des revendications 1 à 9, **caractérisé en ce que**, sur chaque essieu arrière (1, 2) des deux côtés et/ou sur chaque demi-essieu, il est fixé une extrémité d'un amortisseur (4) dont l'autre extrémité est appuyée ou respectivement fixée sur le châssis et/ou le cadre du véhicule (20).

11. Véhicule automobile selon l'une des revendications 1 à 10, **caractérisé en ce que**, sur chaque demi-essieu de chaque essieu arrière (1, 2), il est fixé une extrémité d'un bras oscillant longitudinal (12) dont l'autre extrémité est fixée sur le châssis et/ou le cadre du véhicule (20), de préférence dans un point d'articulation situé devant le demi-essieu vu dans le sens de la marche.

12. Véhicule automobile selon l'une des revendications 1 à 11, **caractérisé en ce que**, sur chaque essieu arrière (1, 2), il est fixé un bras oscillant transversal (13) dont l'autre extrémité est fixée sur le châssis et/ou le cadre du véhicule (20) .

13. Véhicule automobile selon l'une des revendications 1 à 12, **caractérisé en ce que** le cadre du véhicule (20) porte des deux côtés respectivement un tourillon (41) sur lequel est posé le palier articulé (8) du support pendulaire (5) respectif et/ou **en ce que** le module d'essieux arrière et les tourillons (41) sont fixés sur le cadre du véhicule (20) dans une zone de celui-ci dans laquelle le châssis et/ou le cadre du véhicule (20) possède des deux côtés une indentation (33) et/ou sont constitués de façon plus étroite par rapport à la partie restante du cadre du véhicule (20).

14. Véhicule automobile selon l'une des revendications 1 à 13, **caractérisé en ce que** les supports pendulaires (5) sont situés latéralement à l'extérieur du cadre du véhicule (20) ou sont supportés sur les tourillons (41) disposés sur les surfaces latérales des supports de cadre du cadre du véhicule (20) qui sont dirigées vers l'extérieur et/ou sur les tourillons (41) faisant saillie vers l'extérieur à partir du cadre du véhicule (20) .

15. Véhicule automobile selon l'une des revendications 1 à 14, **caractérisé en ce que**, sur le cadre du véhicule (20), il est prévu des butées qui limitent à ± 10°, de préférence à ± 7°, la course de pivotement des supports pendulaires (5) par rapport au cadre du véhicule (20).

16. Véhicule automobile selon l'une des revendications 1 à 15, **caractérisé en ce que** la répartition du couple du couple d'entraînement sur les deux essieux arrière (1, 2) du véhicule s'effectue de façon inversement proportionnelle à la grandeur des distances entre le palier articulé (8) et le point d'appui (6, 7) respectif des unités de ressort (3) et/ou **en ce qu'**un moment plus élevé est appliqué à l'essieu arrière (2) qui est le plus proche du palier articulé (3).

17. Véhicule automobile selon l'une des revendications 1 à 16, **caractérisé en ce que** les amortisseurs (4) sont situés respectivement devant les essieux arrière (1, 2) vu dans le sens de la marche et sont appuyés sur le cadre du véhicule (20) dans une zone située avant les essieux arrière (1, 2).

18. Véhicule automobile selon l'une des revendications 1 à 17, **caractérisé en ce que**, dans la position de construction, les bras oscillants longitudinaux fixés sur l'essieu arrière (1, 2) respectif sont horizontaux ou inclinés de façon montante en formant un angle jusqu'à 10° par rapport au plan d'assise du véhicule dans la direction de l'extrémité avant du véhicule.
